# EUROPEAN PATENT SPECIFICATION

(11) **EP 1 672 869 B1**
(45) Date of publication and mention of the grant of the patent: **27.06.2012**
(21) Application number: 05026702.0
(22) Date of filing: 07.12.2005
(51) Int. Cl.: H04L 29/06

(54) **Sharing of authenticated data**
Gemeinsames Benutzen von authentifizierten Daten
Partage de données authentifiées

(30) Priority: 16.12.2004 GB 0427559
(43) Date of publication of application: 21.06.2006
(73) Proprietor: Nortel Networks Limited, St. Laurent, QC H4S 2A9 (CA)
(72) Inventor: Dawson, Martin, West Wollongong New South Wales 2500 (AU); Winterbottom, James, Gwynneville New South Wales 2500 (AU); Thomson, Martin, Helensburgh New South Wales 2508 (AU)
(74) Representative: Bird, William Edward

(56) References cited:
- EP-A- 1 158 826
- WO-A-03/007542
- US-A- 5 479 482
- PATENT ABSTRACTS OF JAPAN vol. 2003, no. 12, 5 December 2003 (2003-12-05) & JP 2003 348078 A (HITACHI LTD), 5 December 2003 (2003-12-05)
- KIKUCHI T ET AL: "Lifeline communication system in the internet" APPLICATIONS AND THE INTERNET WORKSHOPS, 2004. SAINT 2004 WORKSHOPS. 2004 INTERNATIONAL SYMPOSIUM ON 26-30 JAN. 2004, PISCATAWAY, NJ, USA,IEEE, 26 January 2004 (2004-01-26), pages 217-223, XP010683921 ISBN: 0-7695-2050-2

## Description

### FIELD OF THE INVENTION

This invention relates to methods and apparatus for sharing of authenticated data. The invention relates particularly to sharing of location information data from a certified source.

### BACKGROUND TO THE INVENTION

[When an emergency call is initiated by a caller (also referred to as a user), it is important that the location from which the call is made is known. In traditional voice networks there is a fixed relationship between the telephone number from which the call was made (the calling line identity, CLID) and the location of the caller. The CLID can therefore be used to ensure that the call is routed to the correct emergency services call centre or public services answering point (PSAP) and also provide a look-up key for the calier's address. In cellular networks, the association between the caller's CLID and location is lost. However, the emergency call passes through a base station which identifies the location of the caller to within the area served by that base station. In many cases, the geographic granularity of these base station locations is sufficient to ensure that the call is correctly routed to the emergency services. Furthermore additional location technologies can be applied in cellular networks such as using network measurements, triangulation or special handset capabilities (e.g. assisted-GPS).

In Voice over Internet Protocol (VoIP) networks, there is no association between a CLID and a caller's location. A VoIP caller may connect to a serving call server which is located in a different city or even country to that in which the caller is actually located and this creates difficulties in determining the correct routing for an emergency call. One proposed solution to this problem involves use of a Location Identification Server (LIS) in the access network. The LIS uses positioning technologies to determine the locations of users connected to the access network. The LIS can then provide a user with their location details on request which can be forwarded on to other network entities as required, e.g. when an emergency call is initiated a request can be sent to the LIS for location information and then this information can be forwarded to a router in the network to ensure that the call is routed to the correct PSAP.

An international patent publication WO03/007542 discloses a system for establishing the credibility of geographic location information associated with information transmitted from a wireless device. The invention relates to stamping of a transaction conducted over a wireless medium with geographic position information specific to the wireless device engaged in the transaction. The system described has the capability to cater both self-locating and non-self-locating devices, in which case the location is computed by a third-party. For the purpose of authentication the system can use either public-key solution or secure session. Digital signatures are useful for the purpose of establishing credibility.

A Japanese patent publication 2003348078 relates to a location authentication system, the system comprises a location information server for acquiring and providing location information of a portable terminal. The system also comprises a location authentication server assuring that the location information is not altered. A publication by Kikuchi T et al. "Lifeline communication system in the internet" provides a model that offers, guarantees, notifies and verifies the geographic location information on the Internet.

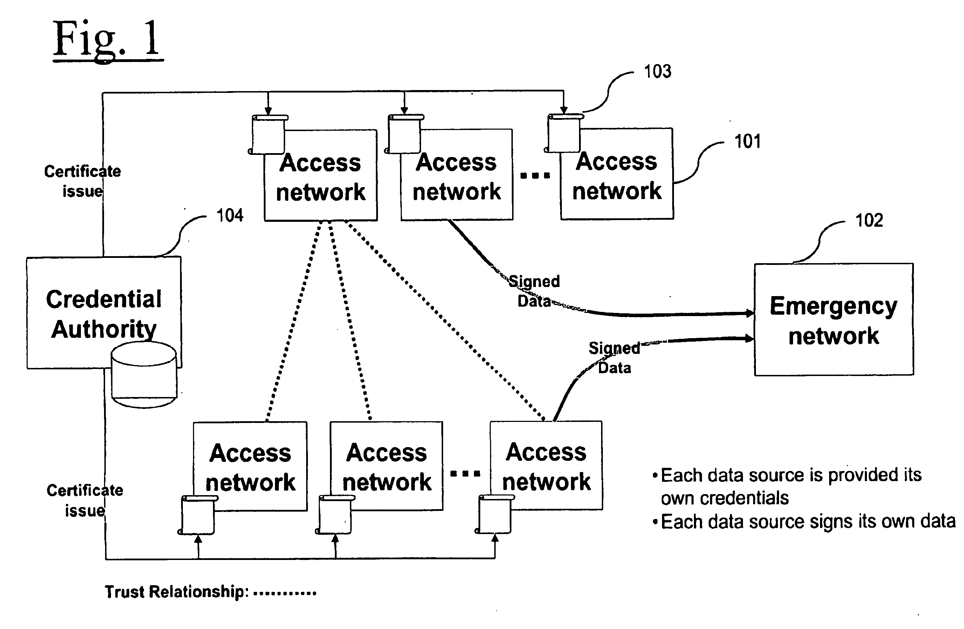

In some circumstances, the recipient of the location information may want to know that the location information is provided by a trusted source. For example, the emergency network may want some certainty that the correct location information has been provided. This occurs naturally in conventional wireline and cellular telephony because the voice service provider also operates the access network (e.g. the local exchange or the network of base stations). As such, the emergency network knows implicitly that it is the voice network (cellular operator or whoever) delivering the call was also the agent responsible for determining the location. In VoIP, the voice service provider does not provide the internet access and cannot be the agent responsible for determining the location. The location information has to be provided along with the call but some other method is required to identify who actually determined that location. A method has been proposed which enables the location information to be digitally signed such that the emergency network can determine whether the location has been provided by a recognised and, preferably, trusted source. This method can be described with reference to figure 1.

Figure 1 shows a schematic diagram of a trust model which comprises a number of access networks 101 and an emergency network 102. Each of the access networks operates a LIS and therefore can provide location information to the emergency network in the event of an emergency call being made. In order to provide signed location data to the emergency network which can then be verified, each access network is provided with a certificate 103 by a credential authority 104. Each certificate 103 can be used to digitally sign any data that it sends and the recipient of the signed data (in this case the emergency network) can check that a valid certificate was used. One technique for implementing this involves the certificate being accompanied by a private encryption key, which is unique to the access network and which can be used to encrypt data that is sent. The credential authority may perform checks on the access network prior to providing the certificate. When an access network wishes to send information to the emergency network, it uses its private key to digitally sign the data before sending. The emergency network may then use a public key, (which may be associated with the access network or the credential authority) to confirm that the signature is valid.

Although the model shown in figure 1 addresses the problem of confirming that the data received comes from a trusted source, as the number of access networks increases, the work of the credential authority in checking the sources and issuing certificates increases significantly. In addition, enterprises which operate their own private networks (or virtual private networks, VPNs) and have several buildings or large buildings, may wish to operate their own LIS. If the model described above in relation to figure 1 is adopted, this will mean that the credential authority will also have to verify large numbers of enterprises and issue them all with their own unique certificates. This administrative burden may make the system inoperable.

### OBJECT TO THE INVENTION

The invention seeks to provide a method of sharing authenticated data which mitigates at least one of the problems of known methods.

### SUMMARY OF THE INVENTION

According to a first aspect of the invention there is provided a method of sending authenticated data by a sender to a third party comprising the steps of:
determining data associated with a communication session initiated by a user, the data being unauthenticated;
sending the unauthenticated data to an intermediary to give rise to authenticated data, the intermediary having an authentication arrangement with the third party and a relationship with the sender,
receiving the authenticated data from the intermediary in dependence on the relationship;
and sending the authenticated data to the third party, the method being characterised in that the intermediary sets for the authenticated data a time limit so that after the time limit has expired the authenticated data is no longer valid.

Advantageously this enables a sender which does not have an authentication arrangement with the third party to provide the third party with authenticated data on the basis of an existing relationship between an intermediary, which does have such an authentication arrangement, and the sender.

This has the further advantage that the administrative burden of setting up authentication arrangements is reduced as it is not necessary for everyone who wishes to send information to the third party to have such an arrangement.

The intermediary may be an access provider.

This has the advantage that the sender is likely to have an existing relationship with its access provider, such as a billing arrangement.

The sender may be an entity operating a server for determining location information.

Advantageously, this enables the sender to send authenticated location information which it has determined to a third party. This location information may be more accurate than can be provided by the intermediary which does have an authentication arrangement.

According to a second aspect of the invention there is provided a method of authenticating data by an intermediary comprising the steps of:
receiving data associated with a communication session initiated by a user from a sender, the data being unauthenticated;
authenticating the data according to an authentication arrangement with a third party in dependence on a relationship between the first intermediary and the sender; and
sending the authenticated data to the sender for forwarding to the third party, the method being characterised by setting for the authenticated data a time limit so that after the time limit has expired the authenticated data is no longer valid.

The method may further comprise the step of: determining if the unauthenticated data meets predetermined criteria; and only authenticating the data if the determination is positive.

Advantageously, this enables the authenticating entity perform checks on the data it is to authenticate, prior to the authentication process. Such checks may include checking whether the data provided by the intermediary is likely to be correct or checking whether the data does actually originate from the sender.

The sender may be an entity operating a server for determining location information.

Preferably the data associated with the communication session is location data. Preferably the third party is an emergency network.

According to a third aspect of the invention there is provided an entity comprising:
means for determining data associated with a communication session initiated by a user, the data being unauthenticated;
means for sending the unauthenticated data to an intermediary to give rise to authenticated data, the intermediary having an authentication arrangement with a third party and a relationship with a sender;
means for receiving the authenticated data from the intermediary in dependence on the relationship; and
means for sending the authenticated data to the third party, the entity being characterised in that it further comprises means for setting for the authenticated data a time limit so that after the time limit has expired the authenticated data is no longer valid.

The means for sending may include a transmitter and the means for receiving may include a receiver. The means for determining may include a processor, a server or other suitable apparatus.

The entity may further comprise means for determining location information.

The means for determining location information may comprise a server, e.g. a Location Information Server.

According to a fourth aspect of the invention there is provided an intermediary comprising: means for receiving data associated with a communication session initiated by a user from a sender, the data being unauthenticated; means for authenticating the data according to an authentication arrangement with a third party in dependence on a relationship between an intermediary and the sender; and means for sending the authenticated data to the sender for forwarding to the third party, the intermediary being characterised in that it further comprises means for setting for the authenticated data a time limit so that after the time limit has expired the authenticated data is no longer valid.

The means for sending may include a transmitter and the means for receiving may include a receiver. The means for authenticating may include a processor.

Preferably the data associated with the communication session is location data. Preferably the third party is an emergency network.

Some or all of the method steps may be performed by software in machine readable form on a storage medium.

This acknowledges that software can be a valuable, separately tradable commodity. It is intended to encompass software, which runs on or controls "dumb" or standard hardware, to carry out the desired functions, (and therefore the software essentially defines the functions of the register, and can therefore be termed a register, even before it is combined with its standard hardware). For similar reasons, it is also intended to encompass software which "describes" or defines the configuration of hardware, such as HDL (hardware description language) software, as is used for designing silicon chips, or for configuring universal programmable chips, to carry out desired functions.

### BRIEF DESCRIPTION OF THE DRAWINGS

Figure 1 shows a schematic diagram of a known trust model;
Figure 2 shows a schematic diagram of a communications network which shows three different types of LIS deployment;
Figure 3 shows a schematic diagram of a trust by proxy arrangement according to the present invention;
Figure 4 shows an example flow diagram detailing the operation of the arrangement of figure 3; and
Figure 5 shows a generalised version of the arrangement shown in figure 3.

### DETAILED DESCRIPTION OF INVENTION

Embodiments of the present invention are described below by way of example only. These examples represent the best ways of putting the invention into practice that are currently known to the Applicant although they are not the only ways in which this could be achieved.

The invention proposes an alternative model which enables signed location data to be provided to emergency networks, or other networks or entities which require verification of the source of the location information.

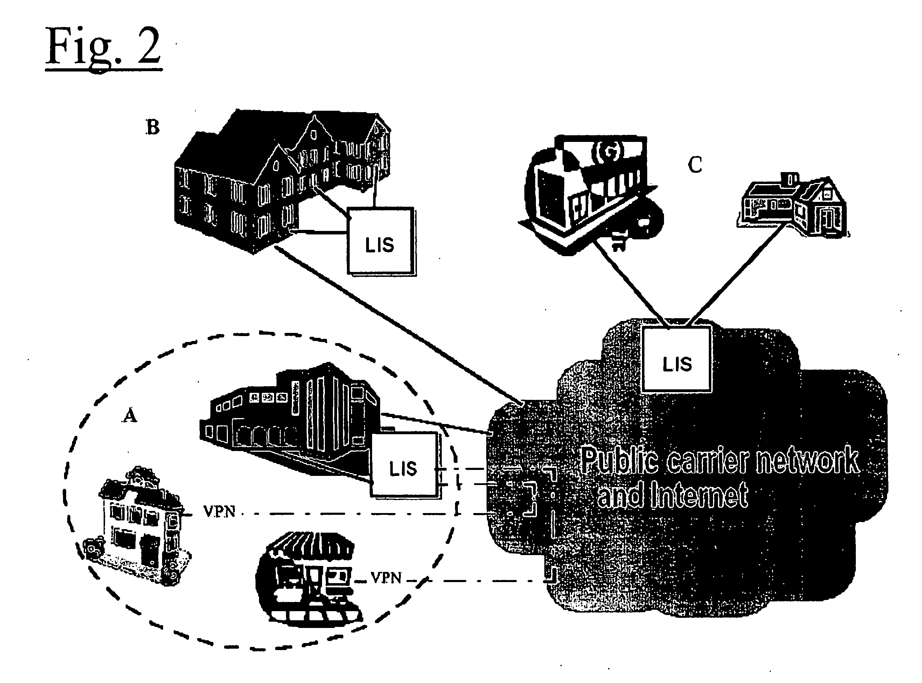

Figure 2 shows a schematic diagram of a communications network which shows three different types of LIS deployment. Enterprise A is a distributed enterprise linked with a VPN which provides its own LIS. Enterprise B is a large, multi-building, campus enterprise with its own LIS and C shows a small enterprise (and a residence) which does not have its own LIS but obtains location information from the public carrier LIS.

If the model shown in figure 1 is used, enterprise A and B will need to have certificates issued to them in order that they can provide digitally signed location information to entities that require it, such as an emergency network. As described above, credentials or certificates are likely to be provided in the form of digital certificates that are issued by an authority that is recognised and trusted by the emergency network operator. Issuing of a certificate will generally be dependent on this authority being satisfied that the recipient meets the necessary criteria (e.g. that it is a genuine enterprise, with a genuine need to operate a LIS, and that answerable parties exist within its organisation).

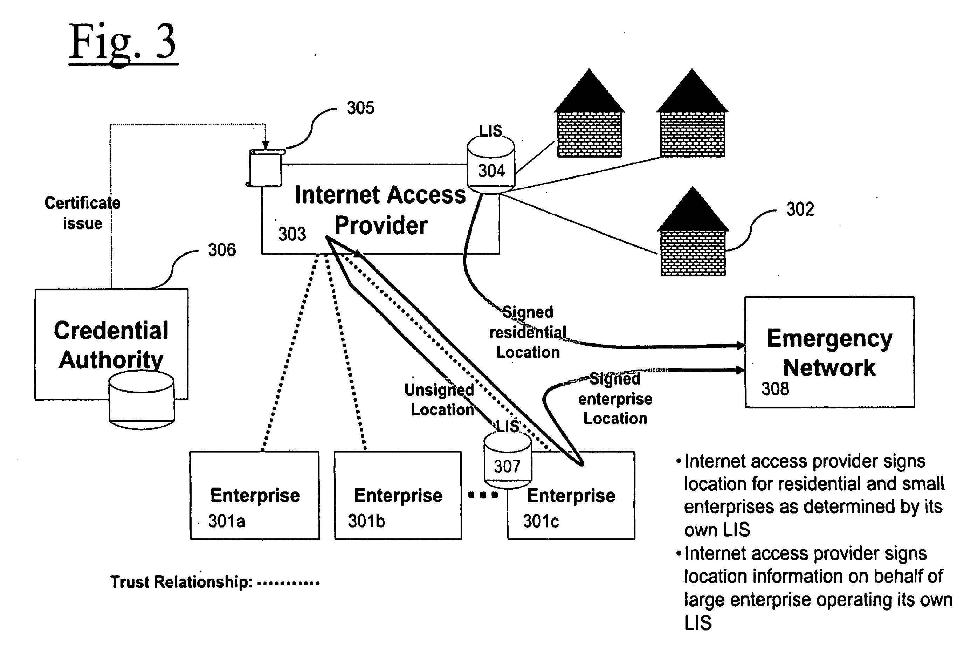

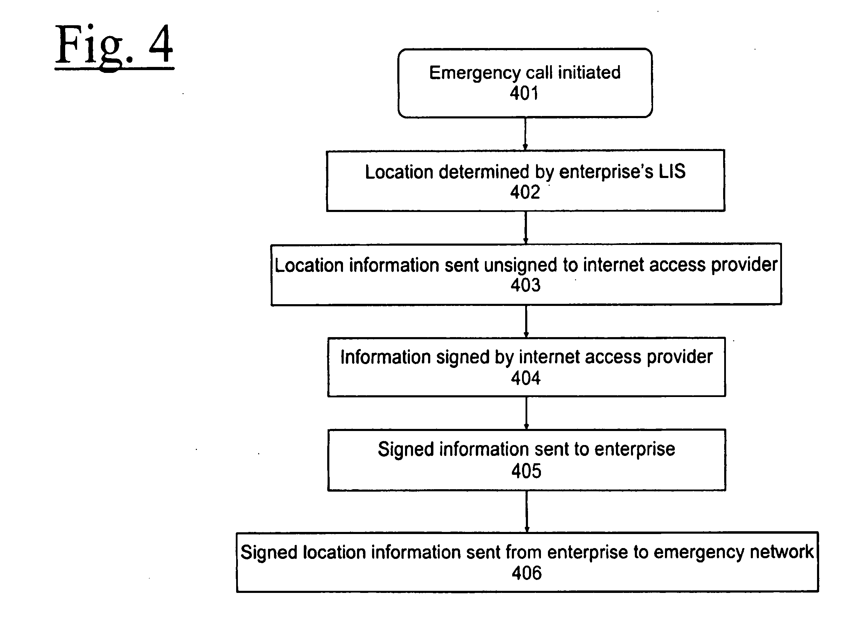

An alternative approach to that shown in figure 1 is to use a trust by proxy arrangement as shown in figure 3, an example of the operation of which is shown in the flow diagram of figure 4. Figure 3 shows a number of enterprises 301 a-c (referred to collectively as enterprises 301), and a number of residences 302. Each enterprise connects to the internet via a public internet access provider 303 which operates a LIS 304 and has a certificate 305 issued by a credential authority 306. Examples of public internet access providers include DSL providers such as BT and cable operators such as NTL. Enterprise 301 c operates a LIS 307 and may be a distributed enterprise linked with a VPN (like Enterprise A in figure 2), a large, multi-building, campus enterprise (like Enterprise B in figure 2) or other configuration.

In order that the public internet access provider will provide internet access to each of its customers (enterprises 301 and residences 302), a contractual relationship between the provider and the customer is established. This relationship may involve setting up billing arrangements, credit checks etc.

When an emergency call is initiated by a user (or caller) within enterprise 301c (step 401), the local LIS 307 provides location information (step 402) associated with the emergency call which may be more precise than could be provided by the internet access provider's LIS. The internet access provider's LIS may only be able to determine that the user's location is within enterprise 301c, whereas the enterprise's LIS may be able to determine which building (or which floor) the call was originated from. The unsigned location information is sent from the enterprise 301c to the internet access provider 303 (step 403). The internet access provider uses its certificate 305 issued by the credential authority 306 to digitally sign the location information (step 404) and then returns the signed location information to the enterprise 301 c (step 405). The enterprise 301 c can then send the signed location information to the emergency network 308 (step 406).

Should there be any problem with the location information provided to the emergency network, then the emergency network can hold the internet access provider accountable as it was the internet access provider that digitally signed the location information. The internet access provider can then hold the enterprise to account because there is a contractual relationship between the two parties.

In order to further confirm that the location information provided by the enterprise's LIS is likely to be accurate, the internet access provider may wish to perform some additional checking prior to digitally signing the information. For example, the internet access provider may know the geographical extent of the enterprise 301c which has its own LIS. In this case, the internet access provider can compare the location information provided by the enterprise against the known locations of the enterprise and only digitally sign the location information if the given location is within the possible extent of the enterprise. Such a location validation system may be arbitrarily sophisticated and reflect the level of service the access provider is providing to the enterprise customers.

When signing the location information, the internet access provider may wish to give an expiry date to the information. For example, the internet access provider may indicate that the location information is only valid for 1 hour, 1 day etc.

Although the above discussion in relation to figures 2-4 relates to authentication of location information, the techniques are equally applicable to other types of information from any source where credentials are provided along with the information to identify the source. The technique is of most benefit where there are a large number of possible sources and hence the administration required to check each source and issue it with its own certificate would be significant.

For example, a large employer may contract with an on line market data information provider on behalf of its travelling work force. The work force is large and variable and the data information provider does not wish to maintain individual account/password information for every employee. The employer does not wish to establish and maintain a server to proxy all requests on behalf of employees through to the information provider with the associated overhead of maintaining this function. Using the technique described, then, each employee would send the data corresponding to their request to the employer credential server. The server would authenticate that employee's identity and sign the query data and return it to the employee device. The employee device will then send this signed query directly to the third party information provider. Having verified that the signature has been applied by the trusted employer organisation, the information provider can then send the query response directly back to the employees device on the basis of transferred trust.

In the above example, this exact same proxy authentication and credentialing infrastructure can be used by the employer for any other form of outsourced service such as emergency medical access, transport booking etc. that it provides its employers without the need for adaptation from one service to the next.

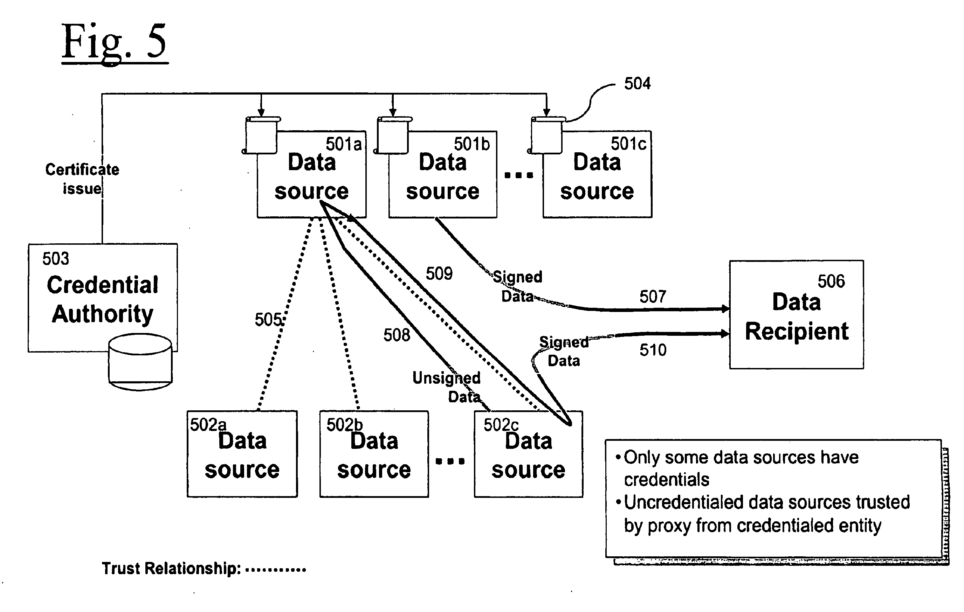

A generalised version of the trust model is shown in figure 5. Figure 5 shows a number of data sources 501 a-c, 502a-c. Each of the data sources 501 a-c have been checked by a credential authority 503 which has issued each of them with a certificate 504, where the certificate is unique to the data source to which it is issued. In contrast, the data sources 502a-c have not been checked by the credential authority and therefore do not hold certificates. However, each of the data sources 502a-c have a trust relationship (indicated by the dotted lines 505) with one of the checked data sources 501 a. A data recipient 506 stipulates that some or all of the information sent to it should be signed in order that the data recipient knows it comes from an authenticated source. The data recipient may set this as a condition so that it knows who to hold accountable should there be a problem with the information that it is provided with.

If data source 501 b has information (also referred to as data) to send to the data recipient 506, the information being associated with a communication session, it uses its own certificate to sign the information and is able to send signed information directly to the data recipient (arrow 507).

Examples of communication sessions include, but are not limited to, voice calls, data transfer sessions, web browsing, and instant messaging sessions. Examples of information that may require authentication include, but are not limited to, location information, usernames and passwords or other identifiers (e.g. employee identification number), originator details, contact details, details relating to the call initiating party (e.g. telephone number, IP address etc) and details of access rights or permission levels (e.g. a level indicator which informs the data recipient of the information / assistance that the user is entitled to receive).

Upon receipt of the information from data source 501 b, the data recipient checks the signed information and determines that it was authenticated by data source 501 b. If there is a problem with the information received, the data recipient can then hold data source 501 b answerable.

If data source 502c has information to send to the data recipient 506, it sends the unsigned information to the authenticated data source 501a (arrow 508). The information may be associated with a communication session initiated by the data source 502c or by a party connected to the data source. The information is signed by the authenticated data source, which may first perform some checks such as checking that the information falls within pre-agreed limits, checking that the information meets predetermined criteria or performing an authentication procedure with the source. The signed information is then sent back to the originating data source 502c (arrow 509) which then forwards the signed information to the data recipient 506 (arrow 510).

Upon receipt of the information from data source 502c, the data recipient checks the signed data and determines that it was authenticated by data source 501 a. If there is a problem with the information received, the data recipient can then hold data source 501a answerable. If data source 501a is held to account for problematic information that it signed on behalf of source 502c, then data source 501 a can hold data source 502c answerable in turn.

In figure 5, entity 501 a which authenticates the information on behalf of the data source 502c which does not have a certificate is shown as another data source. This is by way of example only and the entity which authenticates information on behalf of another with whom it has a relationship may instead be an access provider (as shown in figure 3), a service provider or other body/organisation. The relationship may be a trust relationship, a contractual relationship or other relationship which enables the originating source to be identified and held to account should there be a problem with the accuracy of the information provided or for the information to be otherwise deemed authentic in the provision of a service.

The description above refers to digital signature of the information, which may be by means of encryption using a private key which can then be decrypted using a public key. This is by way of example only and any suitable authentication technique may be used.

The description above proposes that the authenticated entity (e.g. data source 501a) may check that the information provided by the unauthenticated: source-(e.g. data source 502c) falls within pre-agreed limits or meet predetermined criteria. This is by way of example only and the authenticated entity may use other techniques to confirm that the data it receives which purports to originate from a data source with which it has a trust relationship does indeed originate from that data source. Other possible techniques include, but are not limited to, use of local certificates issued by the authenticated entity to sign data, use of usernames and passwords and checking of originating IP address against a list of approved IP addresses.

Although the description above is described as allowing the recipient to hold someone accountable if there is a problem with the information it receives, the techniques are also beneficial if the information is incomplete or requires supplementary questions to be asked of the data source or if the recipient is looking for basic authentication of the source of data regardless of content.

It will be understood that the above description of a preferred embodiment is given by way of example only and that various modifications may be made by those skilled in the art without departing from the scope of the invention as defined in the accompanying claims.

## Claims

1. A method of sending authenticated data by a sender (301a, 301b, 301c, 302. 502a, 502b, 502c) to a third party (308, 506) comprising the steps of:
determining (402) data associated with a communication session initiated by a user, the data being unauthenticated;
sending (403, 508) the unauthenticated data to an intermediary (303, 501a, 501b), 501c) to give rise to authenticated data, the intermediary (303, 501a, 501b, 501c) having an authentication arrangement with the third party (308, 508) and a relationship with the sender (301a, 301b, 301c, 302, 502a, 502b, 502c);
receiving the authenticated data from the intermediary (303, 501a, 501b, 501c) in dependence on the relationship; and
sending_(406, 510) the authenticated data to the third party (308, 506), the method being **characterised in that** the intermediary (308, 506) sets a time limit for the authenticated data so that after the time limit has expired the authenticated data is no longer valid.

2. A method according to claim 1, wherein the intermediary (303, 501a, 501b, 501c) is an access provider.

3. A method according to claim 1 or 2, wherein the sender (301a, 301b, 301c, 302, 502a, 502b, 502c) is an entity operating a server for determining location information.

4. A method of authenticating data by an intermediary (303, 501a, 501b, 501c) comprising the steps of:
receiving data associated with a communication session initiated by a user from a sender (301a, 301b, 301c, 302, 502a, 502b, 502c), the data being unauthenticated;
authenticating (404) the data according to an authentication arrangement with a third party (308, 509) in dependence on a relationship between the intermediary (303, 501a, 501b, 501c) and the sender (301a, 301b, 301c, 302, 502a, 502b, 502c); and sending (405, 509) the authenticated data to the sender (301a, 301b, 301c, 302, 502a, 502b, 502c) for forwarding (406, 510) to the third party (308, 506), the method being **characterised in that** a time limit is set for the authenticated data so that after the time limit has expired the authenticated sata is no longer valid.

5. A method according to claim 4, further comprising the step of:
determining if the unauthenticated data meats predetermined criteria; and
only authenticating the data if the determination is positive.

6. A method according to claim 4 or 5, wherein the sender (301a, 301b, 301c, 302, 502a, 502b, 502c) is an entity operating a server for determining location information

7. A method according to any of the preceding claims wherein the data associated with the communication session is location information.

8. A method according to claim 7, wherein the third party (308, 506) is an emergency network.

9. An entity comprising:
means for determining data associated with a communication session initiated by a user, the data being unauthenticated;
means for sending the unauthenticated data to an intermediary (303, 501a, 501b) 501c) to give rise to authenticated data, the intermediary (303, 501a, 501b, 501c) having an authentication arrangement with a third party (308, 506) and a relationship with a sender (301a, 301b, 301c, 302, 502a, 502b, 502c);
means for receiving the authenticated data from the intermediary (303, 501a, 501b, 501c) in dependence on the relationship; and
means for sending the authenticated data to the third party (308, 506), the entity being **characterised in that** it further comprises means for setting a time limit for the authenticated data so that after the time limit has expired the authenticated data is no longer valid.

10. An entity according to claim 9, further comprising means for determining location information.

11. An entity according to any of claims 9 to 10 wherein the data associated with the communication session is location information.

12. An intermediary comprising:
means for receiving data associated with a communication session initiated by a user from a sender (301a, 301b, 301c, 302, 502a, 502b, 502c) the data being unauthenticated:
means for authenticating the data according to an authentication arrangement with a third party (308, 506) in dependence on a relationship between an intermediary (303, 501a, 501b, 501c) and the sender (301a, 301b, 301c, 302, 502a, 502b, 502c); and means for sending the authenticated data to the sender (301a, 301b, 301c, 302, 502a, 502b, 502c) for forwarding to the third party (308, 506), the intermediary being **characterised in that** it further comprises means for setting a time limit for the authenticated data so that after the time limit has expired the authenticated data is no longer valid.

13. An intermediary according to claim, 12 wherein the data associated with the communication session is location information.

14. An intermediary according to claim 13, wherein the third party (308, 506) is an emergency network.

## Patentansprüche

1. Verfahren zum Senden authentifizierter Daten von einem Sender (301a, 301b, 301c, 302, 502a, 502b, 502c) zu einer dritten Partei (308, 506), umfassend die Schritte des:
Bestimmens (402) von Daten, die einer Kommunikationssitzung zugeordnet sind, die von einem Benutzer eingeleitet wird, wobei die Daten nicht authentifiziert sind;
Sendens (403, 508) der nicht authentifizierten Daten zu einer Vermittlung (303, 501a, 501b, 501c), um authentifizierte Daten zu erhalten, wobei die Vermittlung (303, 501a, 501b, 501c) ein Authentifizierungsarrangement mit der dritten Partei (308, 506) und eine Beziehung mit dem Sender (301a, 301b, 301c, 302, 502a, 502b, 502c) hat;
Empfangens der authentifizierten Daten von der Vermittlung (303, 501a, 501b, 501c) abhängig von der Beziehung; und
Sendens (406, 510) der authentifizierten Daten zur dritten Partei (308, 506), wobei das Verfahren **dadurch gekennzeichnet ist, dass** die Vermittlung (303, 501a, 501b, 501c) für die authentifizierten Daten eine Frist festlegt, so dass die authentifizierten Daten nach Ablauf der Frist nicht mehr gültig sind.

2. Verfahren nach Anspruch 1, wobei die Vermittlung (303, 501a, 501b, 501c) ein Zugangsanbieter ist.

3. Verfahren nach Anspruch 1 oder 2, wobei der Sender (301a, 301b, 301c, 302, 502a, 502b, 502c) eine Einheit ist, die einen Server zum Bestimmen von Ortsinformationen betreibt.

4. Verfahren zum Authentifizieren von Daten durch eine Vermittlung (303, 501a, 501b, 501c), umfassend die Schritte des:
Empfangens von Daten, die einer Kommunikationssitzung zugeordnet sind, die von einem Benutzer eingeleitet wird, von einem Sender (301a, 301b, 301c, 302, 502a, 502b, 502c), wobei die Daten nicht authentifiziert sind;
Authentifizierens (404) der Daten gemäß einem Authentifizierungsarrangement mit einer dritten Partei (308, 506) abhängig von einer Beziehung zwischen der Vermittlung (303, 501a, 501b, 501c) und dem Sender (301a, 301b, 301c, 302, 502a, 502b, 502c); und
Sendens (405, 509) der authentifizierten Daten zum Sender (301a, 301b, 301c, 302, 502a, 502b, 502c) zur Weiterleitung (406, 510) an die dritte Partei (308, 506), wobei das Verfahren **dadurch gekennzeichnet ist, dass** für die authentifizierten Daten eine Frist festgelegt ist, so dass die authentifizierten Daten nach Ablauf der Frist nicht mehr gültig sind.

5. Verfahren nach Anspruch 4, des Weiteren umfassend den Schritt des:
Bestimmens, ob die nicht authentifizierten Daten vorbestimmte Kriterien erfüllen; und
Authentifizierens der Daten nur dann, wenn die Bestimmung positiv ist.

6. Verfahren nach Anspruch 4 oder 5, wobei der Sender (301a, 301b, 301c, 302, 502a, 502b, 502c) eine Einheit ist, die einen Server zum Bestimmen von Ortsinformationen betreibt.

7. Verfahren nach einem der vorangehenden Ansprüche, wobei die Daten, die der Kommunikationssitzung zugeordnet sind, Ortsinformationen sind.

8. Verfahren nach Anspruch 7, wobei die dritte Partei (308, 506) ein Notfall-Netzwerk ist.

9. Einheit, umfassend:
Mittel zum Bestimmen von Daten, die einer Kommunikationssitzung zugeordnet sind, die von einem Benutzer eingeleitet wird, wobei die Daten nicht authentifiziert sind;
Mittel zum Senden der nicht authentifizierten Daten zu einer Vermittlung (303, 501a, 501b, 501c), um authentifizierte Daten zu erhalten, wobei die Vermittlung (303, 501a, 501b, 501c) ein Authentifizierungsarrangement mit einer dritten Partei (308, 506) und eine Beziehung mit einem Sender (301a, 301b, 301c, 302, 502a, 502b, 502c) hat;
Mittel zum Empfangen der authentifizierten Daten von der Vermittlung (303, 501a, 501b, 501c) abhängig von der Beziehung; und
Mittel zum Senden der authentifizierten Daten zur dritten Partei (308, 506), wobei die Einheit **dadurch gekennzeichnet ist, dass** sie ferner ein Mittel zum Festlegen einer Frist für die authentifizierten Daten umfasst, so dass die authentifizierten Daten nach Ablauf der Frist nicht mehr gültig sind.

10. Einheit nach Anspruch 9, des Weiteren umfassend Mittel zum Bestimmen von Ortsinformationen.

11. Einheit nach einem der Ansprüche 9 bis 10, wobei die Daten, die der Kommunikationssitzung zugeordnet sind, Ortsinformationen sind.

12. Vermittlung, umfassend:
Mittel zum Empfangen von Daten, die einer Kommunikationssitzung zugeordnet sind, die von einem Benutzer eingeleitet wird, von einem Sender (301a, 301b, 301c, 302, 502a, 502b, 502c), wobei die Daten nicht authentifiziert sind;
Mittel zum Authentifizieren (404) der Daten gemäß einem Authentifizierungsarrangement mit einer dritten Partei (308, 506) abhängig von einer Beziehung zwischen einer Vermittlung (303, 501a, 501b, 501c) und dem Sender (301a, 301b, 301c, 302, 502a, 502b, 502c); und
Mittel zum Senden der authentifizierten Daten zum Sender (301a, 301b, 301c, 302, 502a, 502b, 502c) zur Weiterleitung an die dritte Partei (308, 506), wobei die Vermittlung **dadurch gekennzeichnet ist, dass** sie ferner Mittel zum Festlegen einer Frist für die authentifizierten Daten umfasst, so dass die authentifizierten Daten nach Ablauf der Frist nicht mehr gültig sind.

13. Vermittlung nach Anspruch 12, wobei die Daten, die der Kommunikationssitzung zugeordnet sind, Ortsinformationen sind.

14. Vermittlung nach Anspruch 13, wobei die dritte Partei (308, 506) ein Notfall-Netzwerk ist.

## Revendications

1. Procédé d'envoi de données authentifiées par un expéditeur (301a, 301b. 301c, 302, 502a, 502b, 502c) à un tiers (308, 506) comprenant les étapes de :
détermination (402) de données associées à une session de communication amorcée par un utilisateur, les données étant non authentifiées ;
envoi (403, 508) des données non authentifiées à un intermédiaire (303, 501a, 501b, 501c) pour produire des données authentifiées, l'intermédiaire (303, 501a, 501b, 501c) ayant un agencement d'authentification avec le tiers (308, 506) et une relation avec l'expéditeur (301a, 301b, 301c, 302, 502a, 502b, 502c) ;
réception des données authentifiées en provenance de l'intermédiaire (303, 501a, 501b, 501c) en fonction de la relation ; et
envoi (406, 510) des données authentifiées au tiers (308, 506), le procédé étant **caractérisé en ce que** l'intermédiaire (308, 506) paramètre pour les données authentifiées un délai de sorte qu'après que le délai a expiré, les données authentifiées sont périmées.

2. Procédé selon la revendication 1, dans lequel l'intermédiaire (303, 501a, 501b, 501c) est un fournisseur d'accès.

3. Procédé selon la revendication 1 ou 2, dans lequel l'expéditeur (301a, 301b, 301c, 302, 502a, 502b, 502c) est une entité mettant en oeuvre un serveur pour déterminer des informations de localisation.

4. Procédé d'authentification de données par un intermédiaire (303, 501a, 501b, 501c) comprenant les étapes de :
réception de données, associées à une session de communication amorcée par un utilisateur, en provenance d'un expéditeur (301a, 301b, 301c, 302, 502a, 502b, 502c), les données étant non authentifiées ;
authentification (404) des données selon un agencement d'authentification avec un tiers (308, 506) en fonction d'une relation entre l'intermédiaire (303, 501a, 501b, 501c) et l'expéditeur (301a, 301b, 301c, 302, 502a, 502b, 502c) ; et
envoi (405, 509) des données authentifiées à l'expéditeur (301a, 301b, 301c, 302, 502a, 502b, 502c) pour faire suivre (406, 510) au tiers (308, 506), le procédé étant **caractérisé en ce qu'**un délai est paramétré pour les données authentifiées de sorte qu'après que le délai a expiré, les données authentifiées sont périmées.

5. Procédé selon la revendication 4, comprenant en outre l'étape de :
détermination si les données non authentifiées satisfont à des critères prédéterminés ; et
authentification des données seulement si la détermination est positive.

6. Procédé selon la revendication 4 ou 5, dans lequel l'expéditeur (301a, 301b, 301c. 302, 502a. 502b, 502c) est une entité mettant en oeuvre un serveur pour déterminer des informations de localisation.

7. Procédé selon l'une quelconque des revendications précédentes, dans lequel les données associées à la session de communication sont des informations de localisation.

8. Procédé selon la revendication 7, dans lequel le tiers (308, 506) est un réseau de secours.

9. Entité comprenant :
un moyen pour déterminer des données associées à une session de communication amorcée par un utilisateur, les données étant non authentifiées ;
un moyen pour envoyer les données non authentifiées à un intermédiaire (303, 501a, 501b, 501c) pour produire des données authentifiées, l'intermédiaire (303, 501a. 501b, 501c) ayant un agencement d'authentification avec un tiers (308, 506) et une relation avec un expéditeur (301a, 301b, 301c, 302, 502a, 502b, 502c) ;
un moyen pour recevoir les données authentifiées en provenance de l'intermédiaire (303, 501a, 501b, 501c) en fonction de la relation ; et
un moyen pour envoyer les données authentifiées au tiers (308, 506), l'entité étant **caractérisée en ce qu'**elle comprend en outre un moyen pour paramétrer pour les données authentifiées un délai de sorte qu'après que le délai a expiré, les données authentifiées sont périmées.

10. Entité selon la revendication 9, comprenant en outre un moyen pour déterminer des informations de localisation.

11. Entité selon l'une quelconque des revendications 9 à 10, dans laquelle les données associées à la session de communication sont des informations de localisation.

12. Intermédiaire comprenant :
un moyen pour recevoir des données, associées à une session de communication amorcée par un utilisateur, en provenance d'un expéditeur (301a, 301b, 301c, 302, 502a, 502b, 502c), les données étant non authentifiées ;
un moyen pour authentifier les données selon un agencement d'authentification avec un tiers (308, 506) en fonction d'une relation entre un intermédiaire (303, 501a, 501b, 501c) et l'expéditeur (301a, 301b, 301c, 302, 502a, 502b, 502c) ; et
un moyen pour envoyer les données authentifiées à l'expéditeur (301a, 301 b, 301c, 302, 502a, 502b, 502c) pour faire suivre au tiers (308, 506), l'intermédiaire étant **caractérisé en ce qu'**il comprend en outre un moyen pour paramétrer pour les données authentifiées un délai de sorte qu'après que le délai a expiré, les données authentifiées sont périmées.

13. Intermédiaire selon la revendication 12, dans lequel les données associées à la session de communication sont des informations de localisation.

14. Intermédiaire selon la revendication 13, dans lequel le tiers (308, 506) est un réseau de secours.
